# FASCICULE DE BREVET EUROPEEN

(11) **EP 1 508 370 B1**
(45) Date de publication et mention de la délivrance du brevet: **17.12.2008**
(21) Numéro de dépôt: 04291953.0
(22) Date de dépôt: 29.07.2004
(51) Int. Cl.: B01J 27/224, C10G 45/06, C10G 45/10

(54) **Utilisation d'un catalyseur comprenant un support en carbure de silicium beta dans un procédé d'hydrodésulfuration selective**
Verfahren zur selektiven Hydrodesulfurierung unter Verwendung eines Silizium beta-karbidträger enthaltenden Katalysators
Use of a silicon-carbide beta supported catalyst in a selective hydrodesulfurisation process

(30) Priorité: 19.08.2003 FR 0310027
(43) Date de publication de la demande: 23.02.2005
(73) Titulaire: Institut Français du Pétrole, 95852 Rueil-Malmaison Cedex (FR)
(72) Inventeur: Bouchy, Christophe, 69007 Lyon (FR); Diehl, Fabrice, 69007 Lyon (FR)

(56) Documents cités:
- WO-A-00/41808
- FR-A- 2 621 904
- GB-A- 899 651
- GB-A- 1 311 473
- US-A- 4 255 253
- US-A1- 2002 148 757
- US-B1- 6 193 877

## Description

### Domaine de l'invention :

La présente invention concerne l'industrie du raffinage du pétrole, et plus particulièrement l'obtention de bases d'essence à partir de différentes unités de conversion de coupes pétrolières, en particulier d'unités de craquage.

Les unités de craquage thermique, par exemple de viscoréduction ou de cokéfaction, ou de craquage catalytique, par exemple de craquage catalytique en lit fluidisé, produisent des coupes d'essence insaturée, comprenant des aromatiques et des oléfines en quantité importante. Ces coupes d'essence ont généralement des teneurs en soufre notables par exemple comprises entre 200 et 3000 ppm poids, ce qui est incompatible avec les spécifications générales de l'essence carburant. Il est donc nécessaire de procéder à une désulfuration poussée de ces coupes pour abaisser leur teneur en soufre à moins de 30 ppm poids ou même 10 ppm poids selon les spécifications en vigueur, ou en prévision des spécifications futures. Les procédés industriels employés actuellement pour effectuer cette opération sont des procédés catalytiques d'hydrodésulfuration.

Ces coupes possèdent typiquement un point final inférieur ou égal à environ 260°C. Elles sont donc sensiblement exemptes d'aromatiques lourds. Ces fractions sont également sensiblement exemptes de métaux tel que nickel, vanadium ou mercure, susceptibles d'empoisonner le catalyseur et/ou d'empêcher sa régénération. L'hydrodésulfuration poussée de ces fractions est cependant très délicate en raison d'un problème technique spécifique : II est en effet nécessaire de désulfurer efficacement ces fractions sans toutefois hydrogéner notablement les oléfines présentes. Une réduction de la teneur en oléfines, et donc corrélativement une augmentation de la teneur en paraffines, conduirait à une chute inacceptable de l'indice d'octane du carburant, paramètre essentiel pour sa valorisation. On recherche donc à réaliser une hydrodésulfuration sélective des fractions traitées, c'est-à-dire une hydrodésulfuration qui permette une élimination du soufre avec une hydrogénation minimale des oléfines de la charge.

### Art antérieur :

Les catalyseurs utilisés industriellement pour cette opération sont typiquement des catalyseurs à base d'alumine, comprenant typiquement au moins un métal ou composé métallique d'un métal du groupe VIII de la classification périodique des éléments (groupe comprenant le nickel, le fer et le cobalt, ce qui permet d'identifier la version de la classification périodique utilisée), et/ou au moins un métal du groupe VIB de cette classification (groupe comprenant le molybdène et le tungstène). Diverses dispositions techniques ont déjà été utilisées pour accroître la sélectivité de l'hydrodésulfuration: modification des conditions opératoires dans lesquelles se déroule la désulfuration, et/ou modification du catalyseur d'hydrodésulfuration afin d'en améliorer la' sélectivité. Plusieurs méthodes sont ainsi proposées pour améliorer la sélectivité du catalyseur. On citera notamment, de manière non exhaustive :
- le brevet US 4,140,626 concernant un procédé d'hydrotraitement de naphta de craquage utilisant un catalyseur contenant un métal du groupe VIB et du groupe VIII déposés sur un support composé d'au moins 70 % d'oxyde de magnésium en masse.
- le brevet US 3,957,625 pour un procédé de désulfuration sélective d'essence de craquage utilisant un catalyseur de type cobalt-molybdène/alumine avec un promoteur choisi parmi le baryum, le magnésium, le cadmium et les terres rares.
- Le brevet US 5,348,928 concernant une méthode de préparation et une formulation d'un catalyseur d'hydrotraitement sélectif comprenant un métal du groupe VIB de 4 à 20 % équivalent oxyde en masse et un métal du groupe VIII de 0,5 à 10 % équivalent oxyde en masse. Le support contient de 0,5 à 50 % équivalent oxyde en masse de magnésium et de 0,02 à 10 % équivalent oxyde d'un alcalin par rapport à la masse totale du catalyseur.

Les catalyseurs connus dans l'état de la technique conduisent cependant à des consommations d'oléfines qui restent notables et préjudiciables à la valorisation du carburant. Cette consommation dépend de la charge traitée, des conditions de l'hydrotraitement, mais également du degré de désulfuration requis. L'un des objets de l'invention est l'utilisation de catalyseurs particuliers permettant d'améliorer la sélectivité de l'hydrodésulfuration de coupes légères comprenant des oléfines. Un autre objet de l'invention est de proposer un procédé d'hydrodésulfuration sélective mettant en oeuvre ces catalyseurs.

### Description de l'invention :

On connaît déjà des catalyseurs comprenant un support constitué par du carbure de silicium β : Le brevet européen EP 0313480 B1 décrit en effet un catalyseur d'hydrotraitement de coupes de distillation du pétrole, ce catalyseur comprenant un support constitué par du carbure de silicium (SiC) β.

Ce support est décrit comme intéressant par le fait qu'il est résistant au double empoisonnement par le coke et par les métaux. L'accumulation de coke est décrite comme liée à la présence d'aromatiques à haut poids moléculaire, et la présence de métaux (principalement nickel et vanadium) est décrite comme résultant de la présence de ces métaux dans les coupes lourdes des pétroles. Au niveau de l'activité désulfurante, celle-ci est mesurée en comparaison avec d'autres catalyseurs (comprenant notamment un catalyseur à support d'alumine de surface 220 m²/g) pour le cas du thiophène. II résulte de cette comparaison que l'activité désulfurante (moles de thiophène transformées par gramme de catalyseur et par seconde) du catalyseur à support SiC est notablement plus faible que celle du catalyseur à support alumine, d'un facteur voisin de 2 à 6 selon les surfaces de support SiC utilisées et proches de celle du catalyseur à base d'alumine.

Ainsi, l'enseignement technique de ce brevet est que le support SiC permet de résoudre les problèmes liés à la présence d'aromatiques à haut poids moléculaire, ou de métaux, dans la charge. Ce brevet n'indique par contre pas d'intérêt à l'utilisation d'un support SiC à la place d'alumine au niveau de l'activité en hydrodésulfuration. Il ne mentionne pas non plus ni ne suggère un intérêt quelconque pour l'utilisation d'un tel catalyseur pour l'hydrodésulfuration sélective de charges oléfiniques selon l'invention (charges sensiblement exemptes des composés indésirables précités).

La demanderesse a par contre découvert de façon surprenante que pour l'hydrodésulfuration sélective de charges oléfiniques, l'utilisation de catalyseurs à support essentiellement constitué de SiC β conduisait à un gain important par rapport aux catalyseurs connus. Il apparaît ainsi que l'utilisation de SiC est avantageuse car elle permet d'une part d'obtenir un catalyseur à sélectivité améliorée, et d'autre part de minimiser la durée de mise en régime de ce catalyseur en limitant la suractivité hydrogénante initiale. Un tel problème est en effet reporté pour des catalyseurs commerciaux supportés sur alumine, et le brevet US 4,149,965 enseigne ainsi de désactiver préalablement le catalyseur avant son utilisation en hydrotraitement d'une charge oléfinique, le traitement de désactivation étant choisi de manière à limiter l'activité hydrogénante du catalyseur.

Sans être lié d'une manière quelconque à une théorie particulière, on peut penser que cet effet pourrait provenir des propriétés du support, qui pourrait être à la fois sensiblement non acide et sensiblement non basique. II est en effet connu que les propriétés hydrogénantes des catalyseurs sont exaltées par l'acidité du support. L'absence d'acidité pourrait contribuer à expliquer les résultats obtenus, grâce à une activité hydrogénante relativement faible du catalyseur à support SiC β vis-à-vis des oléfines. Ceci pourrait favoriser la sélectivité de l'hydrodésulfuration par rapport à l'hydrogénation des oléfines. Il n'est pas à exclure également que la nature de la phase sulfure, et donc ses propriétés catalytiques, puissent être différentes, selon qu'elle est formée sur un support alumine ou sur un support carbure de silicium β.

Le carbure de silicium β utilisable dans l'invention présente une surface spécifique (mesurée par la technique BET) entre 5 et 300 m²/g, et de manière encore préférée comprise entre 10 et 250 m²/g. Le volume poreux du support est compris entre 0,20 cm³/g et 1,0 cm³/g, de préférence comprise entre 0,3 cm³/g et 0,8 cm³/g, et de manière encore préférée comprise entre 0,35 cm³/g et 0,65 cm³/g.

La teneur en métal du groupe VI B, en mole par gramme de support, est comprise entre 6,94 10⁻⁵ et 1,40 10⁻³, de manière préférée entre 8,34 10⁻⁵ et 6,95 10⁻⁴ et de manière très préférée entre 1,04 10⁻⁴ et 5,50 10⁻⁴. La teneur en métal du groupe VIII, en mole par gramme de support, est comprise entre 4,0 10⁻⁵ et 1,1 10⁻³, de manière préférée entre 5,34 10⁻⁵ et 5,34 10⁻⁴, et de manière très préférée entre 6,0 10⁻⁵ et 4,0 10⁻⁴. Le catalyseur peut également avantageusement contenir du phosphore dont la teneur, en mole par gramme de support, peut être comprise entre 1,64 10⁻⁵ et 1,64 10⁻³, de manière préférée entre 8,2 10⁻⁵ et 1,31 10⁻³, et de manière très préférée entre 8,2 10⁻⁵ et 6,6 10⁻⁴.

La fabrication de supports de type carbure de silicium utilisables en catalyse hétérogène est déjà connue et enseignée dans les brevets tels que notamment le brevet EP 0440569 B1 ou encore le brevet US 6,184,178 B1, sans que cette liste soit limitative. Ce type de support est industriellement fabriqué par exemple par la société SICAT Sarl.

D'autres brevets présentent également des catalyseurs en mentionnant le carbure de silicium comme support possible, parmi de très nombreux supports: Le brevet GB 899 651, qui ne concerne cependant qu'un catalyseur d'hydrogénation, typiquement au nickel seul, est donc mal adapté pour l'hydrodésulfuration sélective d'essence. II ne mentionne pas la présence d'éléments du groupe VI B. Le brevet FR 2 621 904 ne mentionne pas non plus l'hydrodésulfuration sélective mais l'hydrodésulfuration du thiophène sans mentionner la présence d'oléfines ni une capacité à limiter l'hydrogénation de ces oléfines.

Les brevets ou demandes de brevet WO 00/41808, GB 1 311 473, US 4 255 253, US/2002/148757 et US 6 193 877 mentionnent aussi des catalyseurs sur support carbure de silicium, mais ne comportent aucun enseignement relatif à leur capacité ou efficacité en hydrodésulfuration sélective d'essence, pour laquelle il faut obtenir une hydrogénation faible des oléfines (HDO) à désulfuration (HDS) donnée, ce qui revient à obtenir un rapport HDO/HDS faible. Ceci est obtenu de façon inattendue selon l'invention.

Les catalyseurs de l'invention peuvent être préparés selon toutes les méthodes de préparation standard connues de l'homme du métier, les différents métaux de la phase active pouvant de plus être déposés séquentiellement ou simultanément sur le support. De manière non exhaustive, on citera les méthodes de préparation par imprégnation à sec, par échange, ou encore par voie de chimie organométallique de surface.

Les catalyseurs peuvent être présulfurés in-situ ou ex-situ avant leur utilisation dans le procédé d'hydrodésulfuration sélective. La sulfuration peut s'effectuer par toute méthode connue de l'homme du métier. On peut par exemple mettre le catalyseur sous atmosphère d'H₂S dilué par un courant d'hydrogène dans des conditions de température et de durée déterminées.

De façon générale, l'invention concerne l'utilisation de catalyseurs supportés, comprenant au moins un métal ou composé métallique d'un métal du groupe formé par les éléments des groupes VIII et/ou VIB de la classification périodique des éléments, déposé sur un support constitué essentiellement par du carbure de silicium β, dans un procédé d'hydrodésulfuration sélective d'une charge hydrocarbonée oléfinique sensiblement dépourvue d'aromatiques polynucléaires et de métaux.

La charge a un point final de distillation inférieur à 260°C, et comprend au moins 5% poids d'oléfines. Cette charge bout dans le domaine de l'essence, c'est à dire dans le domaine de point d'ébullition ASTM compris entre environ 30°C et 230°C. Par exemple, la charge comprend au moins 50 % poids d'essence de pyrolyse et/ou d'essence de craquage catalytique fluide, et peut même être constituée à plus de 90% poids, ou en totalité, par des fractions d'essence, ou de l'essence provenant d'un vapocraqueur et/ou d'un craqueur catalytique fluide (FCC).

Le plus souvent, le procédé d'hydrodésulfuration sélective est réalisé dans des conditions de température comprise entre 200°C et 400°C, de pression comprise entre 0,5 et 4,0 MPa, de rapport H₂/HC compris entre 100 et 600 (litre/litre aux conditions normales), et avec un débit massique horaire de charge par rapport au catalyseur (PPH) compris entre 1 et 15 h⁻¹.

### Exemples :

### Exemple 1 : Préparation d'un catalyseur A pour l'utilisation selon l'invention:

Le catalyseur A est obtenu par l'utilisation d'une méthode de synthèse dite par la voie de Chimie Organo-Métallique de Surface (voie connue sous le sigle COMS). Les extrudés de carbure de silicium SiC (2mm de diamètre) sont fournis par la société SICAT sarl, et leurs caractéristiques principales récapitulées dans le tableau 1.

**Tableau 1: Caractéristiques du support SiC.**

| Mise en forme | Surface: S_{BET} m²/g | Volume poreux (Hg) cm³/g |
|---|---|---|
| Extrudés 2 mm | 53 | 0,4 |

Une solution aqueuse d'heptamolybdate d'ammonium est imprégnée par la méthode dite du volume poreux sur le carbure de silicium. La concentration de la solution en molybdène (Mo) est calculée de manière à obtenir la teneur désirée en Mo sur le support, puis le solide est laissé pour maturation durant 12 heures. Le solide est ensuite séché à 120°C durant douze heures en étuve, puis calciné deux heures à 500°C sous flux d'air sec (1 l/h.g de catalyseur). Le solide est ensuite sulfuré sous débit gazeux d'H₂S dans de l'hydrogène (15 % volume d'H₂S, débit gazeux total de 1 I/h.g de catalyseur) de la température ambiante jusqu'à 400°C (rampe de 5°C/min). La température de 400°C est maintenue constante pendant deux heures, puis le système est refroidi jusqu'à 200°C (rampe de 5°C/min) pour un palier additionnel de deux heures sous hydrogène pur, puis finalement refroidi à température ambiante, toujours sous hydrogène pur. Le solide ainsi prétraité est transféré dans un réacteur adapté à une synthèse par voie COMS (tube de Schlenk). Ce réacteur a été préalablement rempli de solution, de façon que le volume de solution soit égal à 10 cm³ / g de catalyseur, puis purgé à l'argon afin d'éliminer toute trace d'oxygène du milieu. La solution est constituée par un complexe organométallique de Co, le cobalt biscyclopentadiényl Co(C₅H₅)₂ dilué dans du n-heptane. La concentration en complexe organométallique est choisie de manière à obtenir un rapport atomique Co/(Co+Mo) de 0,4. Le solide est laissé en solution durant deux heures à température ambiante sous bullage d'hydrogène, puis lavé sous heptane pur et séché sous flux d'argon à température ambiante durant la nuit. Enfin, le solide est sulfuré en appliquant le même traitement que précédemment. Les caractéristiques du catalyseur après sulfuration sont fournies dans le tableau 2.

**Tableau 2 : Caractéristiques du catalyseur A (conforme à l'utilisation selon l'invention)**

| Teneur en Mo (% poids) | Teneur en Co (% poids) | rapport atomique Co/(Co+Mo) (atome/atome) |
|---|---|---|
| 3,1 | 0,7 | 0,37 |

### Exemple 2 : Préparation d'un catalyseur B (comparatif).

Le catalyseur B est obtenu selon le même protocole de synthèse que le catalyseur A, avec un support industriel de type alumine de la société Axens. Les caractéristiques du support sont données dans le tableau 3 :

**Tableau 3 : Caractéristiques du support alumine industriel**

| Mise en forme | Surface S_{BET} m²/g | Volume poreux (Hg) cm³/g |
|---|---|---|
| Billes 2,4-4 mm | 60 | 0,6 |

Les caractéristiques du catalyseur après sulfuration sont fournies dans le tableau 4 :

**Tableau 4 : Caractéristiques du catalyseur B (comparatif)**

| Teneur en Mo (% poids) | Teneur en Co (% poids) | rapport atomique Co/(Co+Mo) (atome/atome) |
|---|---|---|
| 3,2 | 0,7 | 0,36 |

Le catalyseur B se distingue donc essentiellement du catalyseur A par la nature du support employé, et secondairement par la dimension des grains.

### Exemple 3 : Comparaison de l'utilisation du catalyseur A avec celle du catalvseur B sur une première charge oléfinique.

Afin de s'affranchir de problèmes de limitation diffusionnelle, les catalyseurs sont broyés à la fraction 300-500 micromètres à l'abri de l'air. Les solides sont ensuite passivés sous air à température ambiante durant 4 heures puis chargés dans le réacteur catalytique. Le catalyseur est ensuite sulfuré in-situ par une charge synthétique (6 % poids de diméthyldisulfure dans du n-heptane) dans les conditions suivantes : Pression totale = 2,0 MPa, H₂/charge = 300 (litre/litre), débit massique de charge par rapport au catalyseur et par heure (PPH) = 3 h⁻¹. On effectue un palier de sulfuration de 4 heures à 350°C (montée en température de 20°C/heure). Après sulfuration, la température est abaissée à 150°C et la charge de sulfuration est remplacée par l'essence de FCC à traiter, et les conditions opératoires ajustées. Dans cet exemple les deux catalyseurs sont testés sur une première charge oléfinique constituée par une essence totale de FCC modérément soufrée dont les caractéristiques sont présentées dans le tableau 5.

**Tableau 5 : Caractéristiques de la première charge oléfinique.**

| | |
|---|---|
| S total : | 460 ppm poids |
| densité (25°C) : | 0,76 |
| analyse PONA (% poids) | |
| paraffines: | 28,4 |
| naphtènes: | 8,1 |
| aromatiques : | 29,3 |
| oléfines : | 34,2 |

Les conditions de test sont les suivantes : pression totale : 1,5 MPa,
H₂/charge = 300 (litre/litre), débit massique de charge par rapport au catalyseur et par heure (PPH) = 9 h⁻¹.

On fait varier la température entre 280 et 310°C. Chaque condition opératoire (température) est maintenue constante durant au moins 48 heures, et un point retour permet de s'assurer que la perte d'activité désulfurante du catalyseur est très faible voire nulle. Les niveaux d'HDS et d'HDO sont calculés respectivement selon les formules suivantes :
- HDS = 100 *(1 - S_{f}/S_{O}) où S_{O} et S_{f} représentent les concentrations en soufre dans la charge et dans l'effluent respectivement (en ppm)
- HDO = 100 *(1 - C_{f}/C₀) où C_{O} et C_{f} représentent les concentrations en oléfines dans la charge et dans l'effluent respectivement (en % pds)

Les activités en hydrodésulfuration et en hydrogénation sont calculées en considérant respectivement un ordre 1 (composés soufrés) et un ordre 0 (composés oléfiniques) pour les réactifs:
- A_{HDS}= Ln (100(100-HDS))
- A_{HDO} = Co *HDO / 100

Le tableau 6 détaille les résultats obtenus sur les catalyseurs A et B. Il apparaît que le catalyseur supporté sur carbure de silicium est beaucoup plus sélectif que le catalyseur supporté sur alumine puisque le catalyseur A est systématiquement moins hydrogénant que le catalyseur B.

**Tableau 6 : Hydrodésulfuration sélective d'une première charge oléfinique.**

| Catalyseur | T (°C) | Durée de test (h) | HDS (%) | HDO (%) | A_{HDS} | A_{HDO} |
|---|---|---|---|---|---|---|
| A | 280 | 96 | 74,5 | 12,1 | 1,37 | 0,040 |
| B | 280 | 96 | 73,3 | 15,2 | 1,31 | 0,051 |
| A | 290 | 144 | 86,8 | 19,2 | 2,02 | 0,063 |
| B | 290 | 144 | 86,2 | 24,3 | 1,97 | 0,081 |
| A | 300 | 192 | 94,0 | 29,4 | 2,81 | 0,097 |
| B | 300 | 192 | 93,2 | 33,3 | 2,66 | 0,111 |

Plus précisément, l'utilisation du support carbure de silicium à la place d'alumine permet de diminuer l'activité hydrogénante du catalyseur alors que son activité désulfurante est maintenue constante voire éventuellement légèrement améliorée.

### Exemple 4 : Mise en régime du catalyseur A et du catalyseur B pour l'hydrodésulfuration sélective d'une première charge oléfinique.

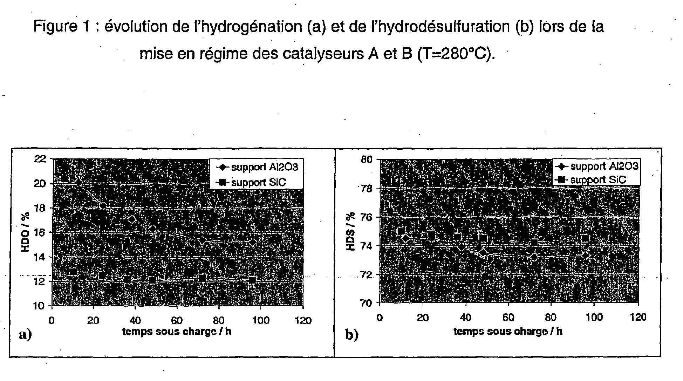

L'évolution de l'hydrodésulfuration et de l'hydrogénation durant les 96 premières heures de test de l'exemple 3 pour le catalyseur A et le catalyseur B est reportée dans le tableau 7, et sur la figure 1.

**Tableau 7 : Evolution des taux d'hydrodésulfuration et d'hydrogénation lors de la mise en régime des catalyseurs A et B lors de l'hydrodésulfuration sélective d'une première charge oléfinique.**

| Catalyseur | Durée de test (h) | HDS (%) | HDO (%) |
|---|---|---|---|
| A | 10 | 75,0 | 12,8 |
| B | 12 | 74,5 | 20,1 |
| A | 24 | 74,8 | 12,5 |
| B | 24 | 74,5 | 18,2 |
| A | 36 | 74,6 | 12,2 |
| B | 38 | 73,9 | 17,1 |
| A | 48 | 74,5 | 12,1 |
| B | 48 | 73,5 | 16,3 |
| A | 72 | 74,2 | 12,3 |
| B | 72 | 73,2 | 15,4 |
| A | 96 | 74,5 | 12,1 |
| B | 96 | 73,3 | 15,2 |

Pendant les premières heures du test, le catalyseur B (non conforme au catalyseur utilisé dans l'invention) présente une suractivité hydrogénante par rapport à son état stabilisé, alors que son activité désulfurante est essentiellement stable. Ainsi, pour atteindre une teneur en soufre similaire, le catalyseur B (non conforme) conduit à l'hydrogénation d'un surplus d'oléfines de la charge en début de test, et la qualité de l'essence obtenue en début de cycle sur le catalyseur B est donc moindre, en terme d'indice d'octane, que celle obtenue sur ce même catalyseur après stabilisation. Pour ce type de catalyseur, un traitement de désactivation partielle tel que proposé dans le brevet US 4,149, 965 est donc recommandé afin de limiter son activité hydrogénante avant passage sous charge. A contrario, ce phénomène est fortement diminué sur le catalyseur A (conforme à l'utilisation selon l'invention), qui ne présente pas de suractivité hydrogénante notable en début de test et atteint très rapidement un état stationnaire. Il n'est ainsi pas nécessaire de désactiver partiellement le catalyseur A avant de le mettre en contact avec une charge.

### Exemple 5 : Comparaison du catalyseur A avec le catalyseur conventionnel B sur une deuxième charge oléfinique.

Dans cet exemple les deux catalyseurs précédents sont testés sur une charge oléfinique dépentanisée (tableau 8), plus soufrée que la précédente.

**Tableau 8 : Caractéristiques de la seconde charge oléfinique**

| | |
|---|---|
| Soufre total : | 2297 ppm poids |
| densité (25°C) : | 0,77 |
| analyse PONA (% poids) | |
| paraffines : | 24,5 |
| naphtènes : | 8,4 |
| aromatiques : | 37,0 |
| oléfines : | 30,1 |

Les conditions de test sont les suivantes : Pression totale = 1,8 MPa, H₂/Charge = 350 (litre/litre), PPH = 7 h⁻¹. On fait varier la température de 280°C à 310°C afin de faire varier le taux de désulfuration. Le tableau 9 détaille les résultats obtenus sur les catalyseurs A et B :

**Tableau 9: Hydrodésulfuration sélective d'une seconde charge oléfinique.**

| Catalyseur | T (°C) | Durée de test (h) | HDS (%) | HDO (%) | A_{HDS} | A_{HDO} |
|---|---|---|---|---|---|---|
| A | 280 | 96 | 77,9 | 13,7 | 1,51 | 0,046 |
| B | 280 | 96 | 77,1 | 16,7 | 1,47 | 0,056 |
| A | 290 | 144 | 87,3 | 18,0 | 2,06 | 0,060 |
| B | 290 | 144 | 86,7 | 20,5 | 2,02 | 0,068 |
| A | 300 | 192 | 92,9 | 22,2 | 2,65 | 0,074 |
| B | 300 | 192 | 92,5 | 25,0 | 2,59 | 0,083 |
| A | 310 | 240 | 95,8 | 26,5 | 3,17 | 0,088 |
| B | 310 | 240 | 95,6 | 30,1 | 3,12 | 0,100 |

Pour cette charge également, le catalyseur supporté sur carbure de silicium s'avère le plus sélectif. La meilleure sélectivité du catalyseur A résulte la encore d'une activité hydrogénante moindre pour le catalyseur A, alors que l'activité désulfurante des deux catalyseurs est sensiblement identique.

## Revendications

1. Utilisation, dans un procédé d'hydrodésulfuration sélective jusqu'à moins de 10 ppm de soufre d'une charge hydrocarbonée bouillant dans le domaine de l'essence, de point final de distillation inférieur à 260 °C, comprenant au moins 5 % poids d'oléfines et sensiblement dépourvue d'aromatiques polynucléaires et de métaux, d'un catalyseur supporté comprenant au moins un métal ou composé métallique d'un métal du groupe VIII et au moins un métal ou composé métallique d'un métal du groupe VI B de la classification périodique des éléments, déposés sur un support constitué par du carbure de silicium β, dans lequel le carbure de silicium β présente une surface spécifique comprise entre 5 et 300 m²/g, le volume poreux du support est compris entre 0,20 cm³/g et 1,0 cm³/g, la teneur en métal du groupe VI B, en mole par gramme de support, est comprise entre 6,94 10⁻⁵ et 1,40 10⁻³, et la teneur en métal du groupe VIII, en mole par gramme de support, est comprise entre 4,0 10⁻⁵ et 1,1 10⁻³.

2. Utilisation selon la revendication 1, dans un procédé d'hydrodésulfuration sélective d'une charge comprenant au moins 50 % poids d'essence de pyrolyse et/ou d'essence de craquage catalytique fluide.

3. Utilisation selon l'une des revendications 1 à 2 dans un procédé d'hydrodésulfuration sélective réalisé dans des conditions de température comprise entre 200°C et 400°C, de pression comprise entre 0,5 et 4,0 MPa, de rapport H2/charge compris entre 100 et 600 (litre/litre), et avec un débit massique horaire de charge par rapport au catalyseur (PPH) compris entre 1 et 15 h⁻¹.

## Claims

1. Use, in a process for the selective hydrodesulphurization of a hydrocarbon feed boiling in the gasoline range with an end point of less than 260°C containing up to 10 ppm of sulphur, comprising at least 5% by weight of olefins and substantially free of polynuclear aromatic compounds and metals, of a support catalyst comprising at least one metal or metallic compound of a metal from group VIII and at least one metal or metallic compound of a metal from group VIB of the periodic table of the elements, deposited on a support constituted by β silicon carbide, in which the β silicon carbide has a specific surface area in the range 5 to 300 m²/g, the pore volume of the support being in the range 0.20 cm³/g to 1.0 cm³/g, the quantity of metal from group VIB, in moles per gram of support, being in the range 6.94 x 10⁻⁵ to 1.40 x 10⁻³, and the quantity of group VIII metal, in moles per gram of support, being in the range 4.0 x 10⁻⁵ to 1.1 x 10⁻³.

2. Use according to claim 1, in a process for the selective hydrodesulphurization of a feed comprising at least 50% by weight of pyrolysis gasoline and/or fluid catalytic cracking gasoline.

3. Use according to claim 1 or claim 2, in a selective hydrodesulphurization process carried out under the following conditions: a temperature in the range 200°C to 400°C, a pressure in the range 0.5 to 4.0 MPa, an H₂/feed ratio in the range 100 to 600 (litre/litre), and at a weight hourly space velocity (WHSV) in the range 1 h⁻¹ to 15 h⁻¹.

## Patentansprüche

1. Verwendung, einer siedenden Kohlenwasserstoffbeschickung im Benzinbereich, in einem Verfahren zur selektiven Hydrodesulfurierung auf weniger als 10 ppm Schwefel mit einem Destillationsendpunkt kleiner als 260 °C, die mindestens 5 Gew.-% Olefine umfasst und im Wesentlichen frei von mehrkernigen Aromaten und von Metallen ist, eines geträgerten Katalysators, der mindestens ein Metall oder eine Metallverbindung eines Metalls der Gruppe VIII und mindestens ein Metall oder eine Metallverbindung eines Metalls der Gruppe VIB des Periodensystems der Elemente umfasst, der auf einem Träger abgelagert ist, der aus β-Siliciumcarbid besteht, wobei das β-Siliciumcarbid eine spezifische Oberfläche im Bereich zwischen 5 und 300 m²/g aufweist, das Porenvolumen des Trägers im Bereich zwischen 0,20 cm³/g und 1,0 cm³/g liegt, der Gehalt an Metall der Gruppe VIB, in Mol je Gramm des Trägers, im Bereich zwischen 6,94 10⁻⁵ und 1,40 10⁻³ liegt, und der Gehalt an Metall der Gruppe VIII, in Mol je Gramm des Trägers, im Bereich zwischen 4,0 10⁻⁵ und 1,1 10⁻³ liegt.

2. Verwendung nach Anspruch 1 in einem Verfahren zur selektiven Hydrodesulfurierung einer Beschickung, die mindestens 50 Gew.-% Pyrolysebenzin und/oder Benzin aus dem Fluidcrackverfahren umfasst.

3. Verwendung nach einem der Ansprüche 1 bis 2 in einen Verfahren zur selektiven Hydrodesulfurierung, das unter Bedingungen einer Temperatur im Bereich zwischen 200 °C und 400 °C, eines Drucks im Bereich zwischen 0,5 und 4,0 MPa, eines Verhältnisses H2/Beschickung im Bereich zwischen 100 und 600 (Liter/Liter), und einer Durchflussrate der Beschickung pro Stunde im Verhältnis zum Katalysator (HSV) im Bereich zwischen 1 und 15 h⁻¹ ausgeführt wird.
